(19) Europäisches Patentamt

European Patent Office

Office européen des brevets

(11) **EP 2 579 365 B1**

(12) **EUROPEAN PATENT SPECIFICATION**

(45) Date of publication and mention of the grant of the patent:
**28.11.2018 Bulletin 2018/48**

(51) Int Cl.:
*H01M 4/134* (2010.01)       *H01M 4/133* (2010.01)
*H01M 4/36* (2006.01)        *H01M 4/38* (2006.01)
*H01M 4/485* (2010.01)       *H01M 4/587* (2010.01)
*H01M 4/62* (2006.01)        *H01M 10/0525* (2010.01)

(21) Application number: **12187380.6**

(22) Date of filing: **05.10.2012**

(54) **Negative active material and lithium battery containing the negative active material**

Negatives aktives Material und Lithiumbatterie mit negativem aktivem Material

Matériau actif négatif et batterie au lithium contenant le matériau actif négatif

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.10.2011   KR 20110101437**

(43) Date of publication of application:
**10.04.2013   Bulletin 2013/15**

(73) Proprietor: **Samsung SDI Co., Ltd.
Yongin-si, Gyeonggi-do (KR)**

(72) Inventors:
• **Cho, Yu-Jeong
  Gyeonggi-do (KR)**
• **Lee, So-Ra
  Gyeonggi-do (KR)**
• **Yoo, Ha-Na
  Gyeonggi-do (KR)**
• **Do, Ui-Song
  Gyeonggi-do (KR)**
• **Shin, Chang-Su
  Gyeonggi-do (KR)**
• **Lee, Su-Kyung
  Gyeonggi-do (KR)**
• **Kim, Jae-Myung
  Gyeonggi-do (KR)**

(74) Representative: **Taor, Simon Edward William et al
Venner Shipley LLP
200 Aldersgate
London EC1A 4HD (GB)**

(56) References cited:
**WO-A1-2011/037919        US-A1- 2002 164 479
US-A1- 2010 285 359        US-A1- 2010 297 502**

• **KHOMENKO ET AL: "Lithium-ion batteries based on carbon-silicon-graphite composite anodes", JOURNAL OF POWER SOURCES, ELSEVIER SA, CH, vol. 165, no. 2, 28 February 2007 (2007-02-28), pages 598-608, XP005914502, ISSN: 0378-7753, DOI: 10.1016/J.JPOWSOUR.2006.10.059**
• **HUANG RUI ET AL: "Carbon-coated silicon nanowire array films for high-performance lithium-ion battery anodes", APPLIED PHYSICS LETTERS, AIP, AMERICAN INSTITUTE OF PHYSICS, MELVILLE, NY, US, vol. 95, no. 13, 1 October 2009 (2009-10-01), pages 133119-133119, XP012125878, ISSN: 0003-6951, DOI: 10.1063/1.3238572**
• **HUIXIN CHEN ET AL: "Silicon nanowires with and without carbon coating as anode materials for lithium-ion batteries", JOURNAL OF SOLID STATE ELECTROCHEMISTRY ; CURRENT RESEARCH AND DEVELOPMENT IN SCIENCE AND TECHNOLOGY, SPRINGER, BERLIN, DE, vol. 14, no. 10, 28 January 2010 (2010-01-28), pages 1829-1834, XP019805801, ISSN: 1433-0768**

EP 2 579 365 B1

## Description

One or more embodiments of the present invention relate to a negative active material and a lithium battery including the negative active material.

Lithium secondary batteries used in portable electronic devices for information communication (such as PDAs, mobile phones, or notebook computers), electric bicycles, electric vehicles, or the like have a discharge voltage that is at least twice as high as that of a conventional battery and thus have high energy density.

Lithium secondary batteries generate electric energy by oxidation and reduction reactions occurring when lithium ions are intercalated into or deintercalated from a positive electrode and a negative electrode, each including an active material that enables intercalation and deintercalation of lithium ions, with an organic electrolytic solution or a polymer electrolyte interposed between the positive electrode and the negative electrode.

As a positive active material for lithium secondary batteries, for example, an oxide that includes lithium and a transition metal and has a structure enabling intercalation of lithium ions may be used. Examples of such an oxide are a lithium cobalt oxide ($LiCoO_2$), a lithium nickel oxide ($LiNiO_2$), a lithium nickel cobalt manganese oxide ($Li[NiCoMn]O_2$ or $Li[Ni_{1-x-y}Co_xMn_y]O_2$), etc.

As a negative active material, a carbonaceous base material and a non-carbonaceous base material, which enable intercalation or deintercalation of lithium ions, are used and studies thereon have been continuously performed. Examples of a carbonaceous base material are artificial graphite, natural graphite, and hard carbon. An example of a non-carbonaceous base material is Si.

A non-carbonaceous base material has a very high capacity that is 10 times greater than that of graphite. However, due to a volumetric expansion and contraction during charging and discharging, capacity retention ratio, charge/discharge efficiency, and lifetime (lifespan) characteristics thereof may be degraded. Accordingly, there is a need to develop a high performance negative active material with improved efficiency and lifespan characteristics.

KHOMENKO ET AL: "Lithium-ion batteries based on carbon-silicon-graphite compositre anode", JOURNAL OF POWER SOURCES, ELSEVIER SA, CH, vol. 165, no. 2, 28 February 2007 (2007-02-28), pages 598-608, XP005914502, ISSN:0378-7753, DOI:10.1016/J.JPOWSOUR.2006.10-059 discloses a silicon-based graphite comprising a graphite core onto which nano-sized particles of silicon are deposited, and which is then coated with a poorly graphitic carbon coating.

US 2010285359 discloses a negative active material for a rechargeable lithium battery including a crystalline carbon core with pores, an amorphous carbon shell, metal nanoparticles dispersed inside the pores, and amorphous carbon inside the pores.

An aspect of one or more embodiments of the present invention is directed toward a negative active material with improved capacity characteristics and cycle lifespan characteristics.

An aspect of one or more embodiments of the present invention is directed toward a lithium battery including the negative active material.

Additional aspects will be set forth in part in the description which follows and, in part, will be apparent from the description, or may be learned by practice of the presented embodiments.

According to a first aspect of the invention, there is provided a negative active material as set out in claim 1. Preferred features of this aspect are set out in claims 2 to 13.

According to a second aspect of the invention, there is provided a lithium battery as set out in claim 14. Preferred features of this aspect are set out in claim 15.

These and/or other aspects will become apparent and more readily appreciated from the following description of the embodiments, taken in conjunction with the accompanying drawings in which:

FIG. 1 is a schematic view of a primary particle included in a negative active material according to an embodiment of the present invention;

FIG. 2 is a schematic view of a lithium battery according to an embodiment of the present invention;

FIGS. 3A and 3B show field emission scanning electron microscope (FE-SEM) images of a cross-section of a negative active material used in manufacturing a coin cell according to Example 1;

FIGS. 4A and 4B show FE-SEM images of a negative active material used in manufacturing a coin cell according to Comparative Example 1;

FIG. 5 shows Raman spectrum analysis results of a negative active material used in the coin cell of Example 1;

FIG. 6 shows particle size distribution measurement results of negative active materials used in manufacturing coin cells according to Examples 1-4 and Comparative Example 1;

FIG. 7 shows electric conductivity measurement results of the coin cells of Example 1-4 and Comparative Example 1;

FIG. 8 shows pH measurement results of negative electrodes of the coin cells of Examples 1-4 and Comparative Example 1;

FIG. 9 shows a result of measuring a volumetric expansion ratio of a negative electrode when the coin cells of Examples 1-4 and Comparative Example 1 are charged and discharged;
FIGS. 10A and 10B show graphs of a charge-discharge efficiency (CDE) of the coin cells of Examples 1-4 and Comparative Example 1; and
FIGS. 11A and 11B show graphs of a capacity retention ratio (CRR) of the coin cells of Examples 1-4 and Comparative Example 1.

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. Expressions such as "at least one of," when preceding a list of elements, modify the entire list of elements and do not modify the individual elements of the list.

Hereinafter, one or more embodiments of the present invention are described in more detail.

A negative active material according to an embodiment of the present invention includes a primary particle including a crystalline carbonaceous core with silicon-based nanowires disposed on a surface thereof, and an amorphous carbonaceous coating layer that is coated on the crystalline carbonaceous core so as not to expose at least a portion of the silicon-based nanowires.

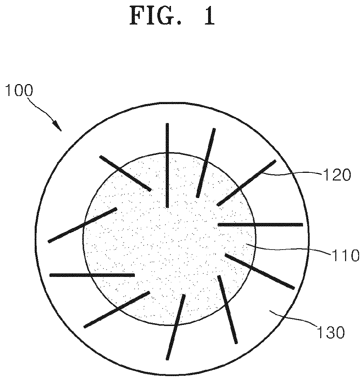

FIG. 1 is a schematic view of a primary particle 100 included in a negative active material according to an embodiment of the present invention. Referring to FIG. 1, the primary particle 100 of the negative active material includes a crystalline carbonaceous core 110 with silicon-based nanowires 120 disposed on a surface thereof and an amorphous carbonaceous coating layer 130 coated on the crystalline carbonaceous core 110 so as not to expose at least a portion of the silicon-based nanowires 120.

In this context, The term "carbonaceous" included in the crystalline carbonaceous core 110 refers to inclusion of at least about 50 wt% of carbon. For example, the crystalline carbonaceous core may include at least about 60 wt%, 70 wt%, 80 wt%, or 90 wt% of carbon, or may include only 100 wt% of carbon.

Also, in this context, the term "crystalline" refers to inclusion of at least about 50 wt% of a hexagonal crystal lattice structure in which a carbon atom that forms a $sp^2$ hybrid orbital is covalently bonded to three other carbon atoms. For example, the crystalline carbonaceous core 110 may include carbon having about 60 wt%, about 70 wt%, about 80 wt%, or about 90 wt% of the hexagonal crystal lattice structure, or may include only carbon having about 100 wt% of the hexagonal crystal lattice structure. The hexagonal crystal lattice structure may form a single- or multi-layer structure, or based on a 2-dimensional shape, may have various deformation shapes, such as a curved shape, a curled shape, a partially defected shape, or the like. Also, many hexagonal crystal lattice structures may be connected to form a soccer ball shape. A crystal structure of the crystalline carbonaceous core 110 can vary in embodiments of the invention as long as lithium ions are reversibly intercalated or deintercalated during charging and discharging. For example, a plane interval (d002) of a (002) plane determined through X-ray diffraction of the crystalline carbonaceous core 110 may be equal to or greater than 0.333 nm and less than 0.339 nm, for example, equal to or greater than 0.335 nm and less than 0.339 nm, or equal to or greater than 0.337 nm and equal to or less than 0.338 nm.

According to an embodiment of the present invention, the crystalline carbonaceous core 110 may include natural graphite, artificial graphite, expandable graphite, graphene, carbon black, fullerene soot, or a combination thereof, but embodiments of the invention are not limited thereto. Natural graphite is graphite that is naturally formed, and examples thereof are flake graphite, high crystalline graphite, microcrystalline or cryptocrystalline graphite, etc. Artificial graphite is graphite that is artificially synthesized, and is formed by heating amorphous carbon at high temperature, and examples thereof are primary or electrographite, secondary graphite, graphite fiber, etc. Expandable graphite is graphite that is formed by intercalating a chemical material, such as an acid or alkali, between graphite layers, followed by heating to swell a vertical layer of a molecular structure. Graphene refers to a single layer of graphite. Carbon black is a crystalline material that has less regular structure than graphite, and when carbon black is heated at a temperature of about 3,000°C for a long period of time, the carbon black may turn into graphite. Fullerene soot refers to a carbon mixture including at least 3 wt% of fullerene that is a polyhedron bundle that is composed of 60 or more carbon atoms. The carbonaceous core may include one of these crystalline carbonaceous materials or a combination of two or more thereof. For example, natural graphite may be used because an assembly density is easily increased when manufacturing a negative electrode.

According to an embodiment of the present invention, a D/G ratio of the crystalline carbonaceous core 110 may be 0.3 or less, wherein the D/G ratio is a ratio of a D (defect) band peak intensity area with respect to a G (graphite) band peak intensity area in a Raman spectrum. For example, in the Raman spectrum, the D/G ratio of the crystalline carbonaceous core 110 may be in a range of about 0.1 to about 0.3. In one embodiment, if the D/G ratio is equal to or less than 0.3, the carbonaceous core 110 has crystallinity, and thus, an irreversible reaction of lithium ions is reduced or minimized during charging and discharging and a reversible efficiency may be increased.

According to an embodiment of the present invention, the crystalline carbonaceous core 110 may be spherical. In this context, the term "spherical" used herein refers to a case in which at least a portion of the carbonaceous core 110 has a gently or sharply curved external shape. The carbonaceous core may have a complete spherical shape, an incomplete spherical shape, or an oval shape. It may further have an uneven surface.

A degree of roundness of the carbonaceous core 110 may be confirmed by measuring a circularity thereof. Circularity refers to a measurement value indicating how much the measured shape, which is a projected image of the carbonaceous core 110, differs from a complete circle and has a range of 0 to 1. Thus, if the circularity is closer to 1, the measured shape is more circular. According to an embodiment of the present invention, a circularity of the carbonaceous core 110 may be in a range of about 0.2 to about 1, or about 0.7 to about 1, or about 0.8 to about 1, or about 0.9 to about 1.

The spherical carbonaceous core 110 may contribute to determining the shape of a primary particle, and compared to a tabular, plate-shaped or lump-shaped carbonaceous core, the carbonaceous core 110 is not orientated in a particular direction during pressing (press-molding), and is suitable for high-rate discharge characteristics, low-temperature characteristics, or the like. Also, a specific surface area of the carbonaceous core 110 is reduced and thus reactivity with an electrolytic solution is decreased. Thus, a formed lithium battery has improved cyclic characteristics.

For example, such a spherical crystalline carbonaceous core 110 may be prepared by performing a spheroidizing treatment of a crystalline carbonaceous material, such as natural graphite, artificial graphite, expandable graphite, graphene, carbon black, fullerene soot, etc. For example, a spherical carbonaceous core obtained by a spheroidizing treatment of graphite may have a microstructure, in which layered graphite may be gently or sharply curved, or may have a microstructure that is composed of a plurality of gently or sharply curved graphite scales or a plurality of graphite thin films.

According to an embodiment of the present invention, when the carbonaceous core 110 is formed in a spherical shape through the spheroidizing treatment, the carbonaceous core 110 may have a pore or pores therein. The pore present inside the carbonaceous core 110 may contribute to a decrease in volumetric expansion of silicon-based nanowires during charging and discharging. According to an embodiment of the present invention, the carbonaceous core 110 may have a porosity of about 5 to about 30%, for example, about 10 to about 20%, based on a total volume of the carbonaceous core.

An average particle size of the carbonaceous core 110 can vary in embodiments of the invention. However, if the average particle size of the carbonaceous core 110 is too small, reactivity with an electrolytic solution is too high and thus cyclic characteristics of a formed lithium battery may be degraded. On the other hand, if the average particle size of the carbonaceous core 110 is too large, dispersion stability in preparing a negative electrode slurry is decreased and a formed negative electrode may have a rough surface. For example, an average particle diameter of the carbonaceous core 110 may be in a range of about 1 to about 30 $\mu$m. For example, the average particle diameter of the carbonaceous core 110 may be in a range of about 5 to about 25 $\mu$m, for example, about 10 to about 20 $\mu$m.

The carbonaceous core 110 may function as a support for fixing the silicon-based nanowires 120 and may also suppress a volumetric change of the silicon-based nanowires 120 during charging and discharging.

The silicon-based nanowires 120 are disposed on a surface of the carbonaceous core 110. In this regard, the term "silicon-based" used herein refers to inclusion of at least about 50 wt% of silicon (Si), for example, at least about 60 wt%, about 70 wt%, about 80 wt%, or about 90 wt% of Si, or may include only 100 wt% of Si. Also, in this regard, the term "nanowire" used herein refers to a wire structure having a nano-diameter cross-section. For example, the nanowire may have a cross-section diameter of about 10 to about 500 nm and a length of about 0.1 to about 100 $\mu$m. Also, an aspect ratio (length:width) of each nanowire may be 10 or more, for example, 50 or more, or for example, 100 or more. Also, diameters of nanowires may be substantially identical to or different from each other, and from among longer axes of nanowires, at least a portion may be linear, gently or sharply curved, or branched. Such silicon-based nanowires may withstand a volumetric change of a lithium battery due to charging and discharging.

The silicon-based nanowires 120 may include, for example, at least one of Si, SiOx ($0<x\leq2$), and Si-Z alloys (where Z is an alkali metal, an alkali earth metal, a Group 13 element, a Group 14 element, Group 15 element, Group 16 element, a transition metal, a rare earth element, or a combination thereof and is not Si), but a material for forming the silicon-based nanowires 120 can vary, and embodiments of the invention are not limited thereto. The element Z may be selected from the group consisting of Mg, Ca, Sr, Ba, Ra, Sc, Y, La, Ti, Zr, Hf, V, Nb, Ta, Cr, Mo, W, Tc, Re, Fe, Ru, Os, Co, Rh, Ir, Ni, Pd, Pt, Cu, Ag, Au, Zn, Cd, B, Ge, P, As, Sb, Bi, S, Se, Te, Po, and combinations thereof. Also, Si, $SiO_x$, and the alloy of Si and Z may include amorphous silicon, crystalline (including single or poly crystalline) silicon, or a combination thereof. The silicon-based nanowires 120 may include these materials alone or in a combination. For example, Si nanowires may be used as the silicon-based nanowires 120 in consideration of high capacity.

The silicon-based nanowires 120 may be manufactured by directly growing silicon-based nanowires on the carbonaceous core 110, or by disposing, for example, attaching or coupling silicon-based nanowires which have been grown separately to the carbonaceous core 110. The silicon-based nanowires 120 may be disposed on the carbonaceous core 110 by using any known placing methods. For example, a nanowire may be grown by using vapor-liquid-solid (VLS) growth method, or using a nano-sized catalyst that thermally decomposes a precursor gas present nearby. The silicon-based nanowires 120 may be directly grown on the carbonaceous core 110 in the presence or absence of a metal catalyst. Examples of the metal catalyst are Pt, Fe, Ni, Co, Au, Ag, Cu, Zn, Cd, etc.

According to an embodiment of the present invention, based on the total amount of the crystalline carbonaceous core 110 and the silicon-based nanowires 120, an amount of the crystalline carbonaceous core 110 may be in a range of about 60 to about 99 wt% and an amount of the silicon-based nanowires 120 may be in a range of about 1 to about 40 wt%. Due to the inclusion of this amount range of high-capacity silicon-based nanowires, a high-capacity negative active material may be obtained.

The amorphous carbonaceous coating layer 130 is coated on the crystalline carbonaceous core 110 with the silicon-based nanowires 120 disposed on a surface thereof so as not to expose at least a portion of the silicon-based nanowires 120. In this context, term "amorphous" refers to a case in which a distinctive crystal structure is not present. The amorphous carbonaceous coating layer 130 may include, for example, at least about 50 wt%, about 60 wt%, about 70 wt%, about 80 wt%, or about 90 wt% of amorphous carbon, or may include 100 wt% of amorphous carbon.

According to an embodiment of the present invention, a D/G ratio of the amorphous carbonaceous coating layer 130 may be 3.0 or more, wherein the D/G ratio is a ratio of a D (defect) band peak intensity area with respect to a G (graphite) band peak intensity area in a Raman spectrum. For example, in the Raman spectrum, the D/G ratio of the amorphous carbonaceous coating layer 130 may be in a range of 3.0 to 4.0, for example, 3.1 to 3.6, 3.1 to 3.2, or 3.3 to 3.6. These D/G ratio values are distinguished from those of the crystalline carbonaceous core 110.

According to an embodiment of the present invention, the amorphous carbonaceous coating layer 130 is formed in such a way that at least 50 vol% of the silicon-based nanowires 120 are embedded in the amorphous carbonaceous coating layer 130. For example, at least 60 vol%, 70 vol%, 80 vol%, or 90 vol% of the silicon-based nanowires 120 are embedded in the amorphous carbonaceous coating layer 130, or the silicon-based nanowires 120 may be completely embedded not to be exposed to a surface of the primary particle.

The amorphous carbonaceous coating layer 130 prevents (or protects from) separation or elimination of the silicon-based nanowires 120 during charging and discharging, thereby contributing to stability of an electrode and an increase of a lifespan of an electrode. Also, the amorphous carbonaceous coating layer 130 may provide electric conductivity for the negative active material, of which an electric conductivity has been reduced due to the silicon-based nanowires 120, and improve efficiency characteristics.

According to an embodiment of the present invention, the amorphous carbonaceous coating layer 130 may include soft carbon, hard carbon, pitch carbonized material, mesophase carbonized material, calcined cokes, or a combination thereof.

A coating method for the amorphous carbonaceous coating layer 130 may be, but is not limited to in embodiments of the invention, dry coating or liquid coating. Examples of the dry coating are deposition, chemical vapor deposition (CVD), etc, and examples of the liquid coating are impregnation, spraying, etc. For example, the crystalline carbonaceous core 110 on which the silicon-based nanowires 120 are disposed may be coated with a carbon precursor, such as a coal-based pitch, a mesophase pitch, a petroleum-based pitch, a coal-based oil, a petroleum-based crude oil, an organic synthetic pitch, or a polymer resin, such as a phenol resin, a furan resin, a polyimide resin, or the like, followed by heat treating to form the amorphous carbonaceous coating layer 130.

The amorphous carbonaceous coating layer 130 may be formed in such a thickness that the amorphous carbonaceous coating layer 130 provides a sufficient conductive passage between primary particles without a decrease in battery capacity. For example, the thickness of the amorphous carbonaceous coating layer 130 may be in a range of about 0.1 to about 10 μm, for example, about 0.5 to about 10 μm, or about 1 to about 5 μm, but is not limited thereto in embodiments of the invention.

According to an embodiment of the present invention, an amount of the amorphous carbonaceous coating layer 130 may be in a range of about 0.1 to about 30 wt% based on the primary particle. For example, an amount of the amorphous carbonaceous coating layer 130 may be in a range of about 1 to about 25 wt%, or 5 to 25 wt%, based on the primary particle. Within the range described above, the amorphous carbonaceous coating layer 130 may have an appropriate thickness, and may provide conductivity to a negative active material.

According to an embodiment of the present invention, the primary particle may be agglomerated or combined with each other to form a secondary particle, or may be combined with other active components to form a secondary particle.

According to an embodiment of the present invention, the negative active material may further include, together with the primary particles, a carbonaceous particle including at least one of natural graphite, artificial graphite, expandable graphite, graphene, carbon black, fullerene soot, carbon nanotubes, and carbon fiber. In this regard, the carbonaceous particle may be included in a spherical, tabular, fibrous, tubular, or powder form. For example, the carbonaceous particle may be added in an intrinsic form thereof, such as a spherical, tabular, fibrous, tubular, or powder form, to the negative active material, or may be subjected to a spheroidizing treatment as described with the carbonaceous core 110 of the primary particles and then added in a spherical particle form to the negative active material. If spherical particles are added, a spherical particle formed of a material that is identical to or different from the carbonaceous core 110 of the primary particle may be added.

A lithium battery according to an embodiment of the present invention includes a negative electrode including the negative active material; a positive electrode facing the negative electrode; and an electrolyte disposed between the negative electrode and the positive electrode.

The negative electrode may include the negative active material. The negative electrode may be manufactured by using various methods. For example, the negative active material, a binder, and selectively, a conductive agent are mixed in a solvent to prepare a negative active material composition, and then the negative active material composition is molded in a set or predetermined shape. Alternatively, the negative active material composition may be applied on a current collector, such as a copper foil or the like.

The binder included in the negative active material composition may aid a bond between the negative active material and, for example, the conductive agent; and a bond between the negative active material and the current collector. An amount of the binder herein may be, based on 100 parts by weight of the negative active material, in a range of 1 to 50 parts by weight. For example, the amount of the binder may be in a range of 1 to 30 parts by weight, 1 to 20 parts by weight, or 1 to 15 parts by weight, based on 100 parts by weight of the negative active material. Examples of the binder are polyvinylidenefluoride, polyvinylidenechloride, polybenzimidazole, polyimide, polyvinylacetate, polyacrylonitrile, polyvinylalcohol, carboxymethylcellulose (CMC), starch, hydroxypropylcellulose, regenerated cellulose, polyvinylpyrrolidone, polyethylene, polypropylene, polystyrene, polymethylmethacrylate, polyaniline, acrylonitrile-butadiene-styrene copolymer, phenol resin, epoxy resin, polyethyleneterethphalate, polytetrafluoroethylene, polyphenylsulfide, polyamideimide, polyetherimide, polyethersulfone, polyamide, polyacetal, polyphenyleneoxide, polybutyleneterephthalate, ethylene-propylene-diene terpolymer (EPDM), sulfonated EPDM, styrene butadiene rubber, fluorine rubber, various copolymers, and a combination thereof.

The negative electrode may further include a conductive agent that is included selectively to provide a conductive passage to the negative active material to further improve electrical conductivity. As the conductive agent, any material used in a typical lithium battery may be used herein. Examples of the conductive agent are a carbonaceous material such as carbon black, acetylene black, ketjen black, carbon fiber (for example, a vapor phase growth carbon fiber), or the like; a metal such as copper, nickel, aluminum, silver, or the like, each of which may be used in powder or fiber form; a conductive polymer such as a polyphenylene derivative; and a mixture thereof. An amount of the conductive agent may be appropriately controlled. For example, the conductive agent may be added in such an amount that a weight ratio of the negative active material to the conductive agent is in a range of about 99:1 to about 90:10.

The solvent may be N-methylpyrrolidone (NMP), acetone, water, or the like. An amount of the solvent may be in a range of about 10 to about 100 parts by weight based on 100 parts by weight of the negative active material. In one embodiment, if the amount of the solvent is within this range, an active material layer is easily formed.

Also, the current collector may typically be formed in a thickness of about 3 to about 500 $\mu$m. In embodiments of the invention, the current collector is not particularly limited as long as the current collector does not cause a chemical change in a battery and has conductivity. Examples of a material that forms the current collector are copper; stainless steel; aluminum; nickel; titanium; calcined carbon; copper and stainless steel that are surface-treated with carbon, nickel, titanium, silver, or the like; an alloy of aluminum and cadmium; etc. Also, an uneven micro structure may be formed on the surface of the current collector to enhance a binding force with the negative active material. Also, the current collector may be used in various forms including a film, a sheet, a foil, a net, a porous structure, a foaming structure, a non-woven structure, etc.

The prepared negative active material composition may be directly coated on a current collector to form a negative electrode plate. Alternatively, the negative active material composition may be cast onto a separate support and then the negative active material film separated from the support is laminated on the current collector, such as a copper foil, to obtain the negative electrode plate.

The negative active material composition may be printed on a flexible electrode substrate to manufacture a printable battery, in addition to the use in manufacturing a lithium battery.

Separately, for the manufacture of a positive electrode, a positive active material composition prepared by mixing a positive active material, a conductive agent, a binder, and a solvent.

As the positive active material, any lithium-containing metal oxide that is conventionally used in the art is used herein. For example, $LiCoO_2$, $LiMn_xO_{2x}$ (where x is 1 or 2), $LiNi_{1-x}Mn_xO_2$ (where 0<X<1), or $LiNi_{1-x-y}Co_xMn_yO_2$ (where $0 \leq x \leq 0.5$ and $0 \leq y \leq 0.5$), or the like may be used. For example, a compound that intercalates and/or deintercalates lithium, such as $LiMn_2O_4$, $LiCoO_2$, $LiNiO_2$, $LiFeO_2$, $V_2O_5$, TiS, MoS, or the like, may be used as the positive active material.

The conductive agent, the binder, and the solvent included in preparing the positive active material composition may be identical to those included in the negative active material composition. In some cases, a plasticizer may be further added to the positive active material composition and the negative active material composition to form pores in a corresponding electrode plate. Amounts of the positive active material, the conductive agent, the binder, and the solvent may be the same as used in a conventional lithium battery.

A positive electrode current collector may have a thickness of about 3 to about 500 $\mu$m, and may be any of various current collectors that do not cause a chemical change in a battery and has high conductivity. Examples of the positive electrode current collector are stainless steel, aluminum, nickel, titanium, calcined carbon, and aluminum and stainless steel that are surface-treated with carbon, nickel, titanium, silver, or the like. The positive electrode current collector may have an uneven micro structure at its surface to enhance a binding force with the positive active material. Also, the current collector may be used in various forms including a film, a sheet, a foil, a net, a porous structure, a foaming structure, a non-woven structure, etc.

The prepared positive active material composition may be directly coated on the positive electrode current collector to form a positive electrode plate, or may be cast onto a separate support and then a positive active material film separated from the support is laminated on the positive electrode current collector to obtain a positive electrode plate.

The positive electrode may be separated from the negative electrode by a separator, and the separator may be any of various suitable separators that are typically used in a lithium battery. For example, the separator may include a material that has a low resistance to migration of ions of an electrolyte and an excellent electrolytic solution-retaining capability. For example, the separator may include a material selected from the group consisting of glass fiber, polyester, Teflon, polyethylene, polypropylene, polytetrafluoroethylene (PTFE), and a combination thereof, each of which may be nonwoven or woven. The separator may have a pore size of about 0.01 to about 10 $\mu$m and a thickness of about 5 to about 300 $\mu$m.

A lithium salt-containing non-aqueous based electrolyte includes a non-aqueous electrolyte and lithium. Examples of the non-aqueous electrolyte are a non-aqueous electrolytic solution, an organic solid electrolyte, an inorganic solid electrolyte, etc.

As the non-aqueous electrolytic solution, a non-protogenic organic solvent may be used, and examples of the non-protogenic organic solvent are N-methyl-2-pyrrolidone, propylene carbonate, ethylene carbonate, butylene carbonate, dimethyl carbonate, diethyl carbonate, fluorinated ethylenecarbonate, ethylenemethylenecarbonate, methylpropylcarbonate, ethylpropanoate, methylacetate, ethylacetate, propylacetate, gamma-butyrolactone, 1,2-dimethoxy ethane, tetrahydrofurane, 2-methyl tetrahydrofurane, dimethylsulfoxide, 1,3-dioxolane, formamide, dimethylformamide, acetonitrile, nitromethane, methyl formic acid, methyl acetatic acid, phosphoric acid triester, trimethoxy methane, dioxolane derivatives, sulfolanes, methyl sulfolanes, 1,3-dimethyl-2-imidazolidinone, propylene carbonate derivatives, tetrahydrofurane derivatives, ethers, methyl propionic acid, ethyl propionic acid, etc.

Examples of the organic solid electrolyte are a polyethylene derivative, a polyethylene oxide derivative, a polypropylene oxide derivative, a phosphate ester polymer, polyester sulfide, polyvinyl alcohol, poly fluorinated vinylidene, a polymer having an ionic dissociable group, etc.

Examples of the inorganic solid electrolyte are nitrides, halides, sulfides, and silicates of Li, such as $Li_3N$, $LiI$, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, $Li_3PO_4$-$Li_2S$-$SiS_2$, and the like.

The lithium salt may be any one of various lithium salts that are suitable for use in a lithium battery. As a material that is dissolved in the non-aqueous electrolyte, for example, one or more of LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, lithiumchloroborate, lower aliphatic carbonic acid lithium, 4 phenyl boric acid lithium, lithium imide, etc., may be used.

A lithium battery may be categorized as a lithium ion battery, a lithium ion polymer battery, or a lithium polymer battery, according to a separator used and an electrolyte used. A lithium battery may also be categorized as a cylindrical lithium battery, a square-shaped lithium battery, a coin-shaped lithium battery, or a pouch-shaped lithium battery, according to the shape thereof. A lithium battery may also be categorized as a bulk-size lithium battery or a thin layer-size lithium battery, according to the size thereof. The lithium batteries listed above may also be primary batteries or secondary batteries.

A method of manufacturing the lithium batteries is apparent to one skilled in the art and thus will not be described in detail herein.

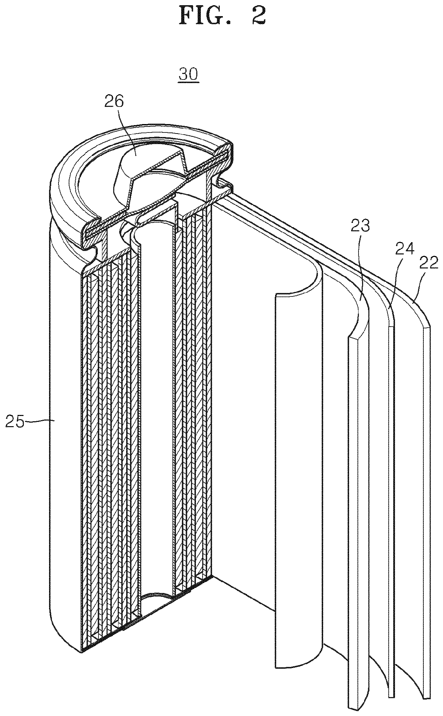

FIG. 2 is a schematic view of a lithium battery 30 according to an embodiment of the present invention.

Referring to FIG. 2, the lithium battery 30 includes a positive electrode 23, a negative electrode 22, and a separator 24 interposed between the positive electrode 23 and the negative electrode 22. The positive electrode 23, the negative electrode 22, and the separator 24 are wound or folded to be housed in a battery case 25. Then, an electrolyte is injected into the battery case 25, followed by sealing the battery case 25 with an encapsulation member 26, thereby completing the manufacture of the lithium battery 30. The battery case 25 may be a cylindrical, rectangular, or thin film battery case. The lithium battery 30 may be a lithium ion battery.

A lithium battery according to an embodiment of the present invention may be used in, in addition to a mobile phone or a portable computer, an application, such as an electric vehicle, that requires high capacity, high power output, and high-temperature driving. Also, the lithium battery may be combined with an existing internal-combustion engine, a fuel cell, a super capacitor, or the like for use in a hybrid vehicle, or the like. Furthermore, the lithium battery may be used in any other suitable applications that require high power output, high voltage, and high-temperature driving.

Hereinafter, exemplary embodiments of the present invention will be described in detail with reference to examples. However, the examples are illustrated for illustrative purposes only and do not limit the scope of the present invention.

### Example 1

Si nanowires (SiNWs) were grown on spherical natural graphite by vapor-liquid-solid (VLS) growth. First, Ag seeds were formed on the surface of spherical natural graphite (Hitachi Chemical Company) having an average diameter of about 10 $\mu$m by using a solution containing ionized Ag, and then $SiH_4$ gas was supplied thereto at a rate of 0.2 L/min based on 10 L chamber for 10 minutes to grow SiNW.Then, the spherical graphite particles were randomly collected and then a circularity thereof was measured by using FPIA-3000. The circularity was in a range of 0.808 to 1.000. The grown SiNWs had an average diameter of about 30 to about 50 nm, an average length of about 1.5 $\mu$m, and an amount of SiNW was 7.15 wt%.

3 wt% of coal tar pitch based on 100 wt% of the entire active material was coated on a surface of the spherical graphite having the grown SiNWs thereon. The coating was performed as follows: coal tar pitch was dissolved in NMP solvent and stirred at the temperature of 60 °C for about 30 minutes, and then, the result solution was stirred while the SiNW active material was added thereto. The stirring of the result solution was performed at the temperature of about 150 °C until the solvent was removed by drying. Then, the result was completely dried up in an oven at the temperature of 110 °C .The pitch coated spherical graphite was heat treated in a nitrogen atmosphere. The temperature was increased at a rate of 5 °C /min, and then, maintained at the temperature of 1000 °C for 1 hour, and then followed by natural cooling, thereby completing the preparation of a negative active material.

The prepared negative active material and $LSR_7$ (a manufacturer: Hitachi Chemical, a binder that consists of PAI and N-methyl-2-pyrrolidone) as a binder were mixed in a weight ratio of 90:10 and then N-methylpyrrolidone was added thereto to control the viscosity thereof until a solid content thereof reached 30 to 50 wt%, thereby completing preparation of a negative active material slurry. The prepared slurry was coated on a copper foil current collector having a thickness of 10 $\mu$m to manufacture a negative electrode plate. The completely coated electrode plate was dried at the temperature of 120°C for 15 minutes, followed by pressing, thereby completing the manufacture of a negative electrode having a thickness of 60 $\mu$m. An Li metal as a reference electrode and a polyethylene separator having a thickness of 20 $\mu$m (product name: STAR20, Asahi) were used, and an electrolyte was injected thereto, and the resultant structure was pressed to complete the manufacture of a 2016R type coin cell. In this case, the electrolyte was 0.75 M $LiPF_6$ dissolved in a mixed solvent of ethylene carbonate (EC), diethyl carbonate (DEC), ethylpropanoate (EP), and fluoro ethylene carbonate (FEC) at a volumetric ratio of EC:DEC:EP:FEC = 25.3:3:40.7:38:8. After welding a coin cell, vacuum drying was performed thereon at the temperature of 160°C for 2 hours to harden the binder and remove moisture.

### Example 2

A negative active material and a coin cell were prepared in the same manner as in Example 1, except that in preparing the negative active material, 6 wt% of coal tar pitch based on 100 wt% of the entire active material was used for pitch coating.

### Example 3

A negative active material and a coin cell were prepared in the same manner as in Example 1, except that in preparing the negative active material, 10 wt% of coal tar pitch based on 100 wt% of the entire active material was used for pitch coating.

### Example 4

A negative active material and a coin cell were prepared in the same manner as in Example 1, except that in preparing the negative active material, 15 wt% of coal tar pitch based on 100 wt% of the entire active material was used for pitch coating.

### Comparative Example 1

A coin cell was prepared in the same manner as in Example 1, except that primary particles prepared by growing SiNWs on spherical graphite were used as a negative active material without pitch coating.

(Negative active material analysis)

**Evaluation Example 1: Analysis on field emission scanning electron microscope (FE-SEM) image of negative active material**

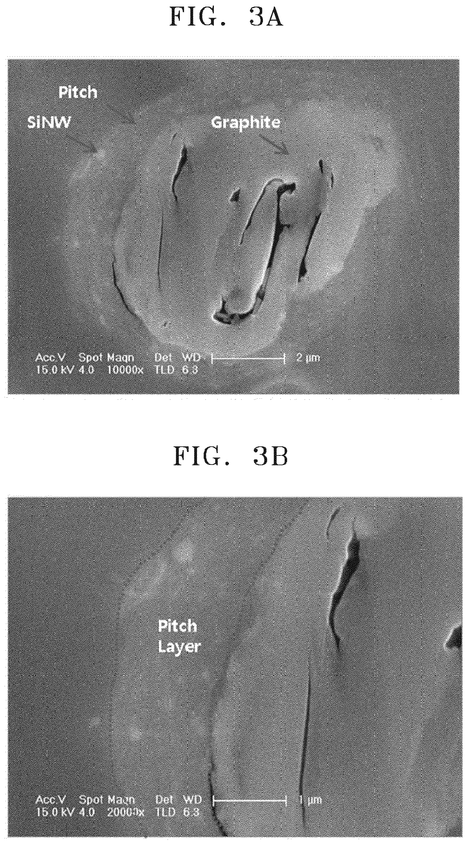

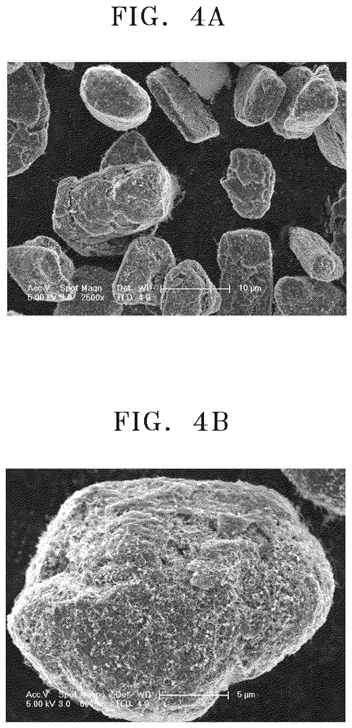

The negative active materials used in preparing the coin cells according to Example 1 and Comparative Example 1 were analyzed by FE-SEM. FE-SEM images of a cross section of the negative active material used in Example 1 are shown in FIGS. 3A and 3B. FE-SEM images of a cross section of the negative active material used in Comparative Example 1 are shown in FIGS. 4A and 4B.

As shown in FIGS. 4A and 4B, regarding the negative active material used in Comparative Example 1, SiNWs grown on spherical graphite are exposed. However, as shown in FIGS. 3A and 3B, regarding the negative active material used in Example 1, a pitch coating layer having a thickness of about 1.5 to 2 $\mu$m is formed on spherical graphite on which SiNWs are grown and the pitch coating layer surrounds SiNWs.

**Evaluation Example 2: Raman spectrum analysis of negative active material**

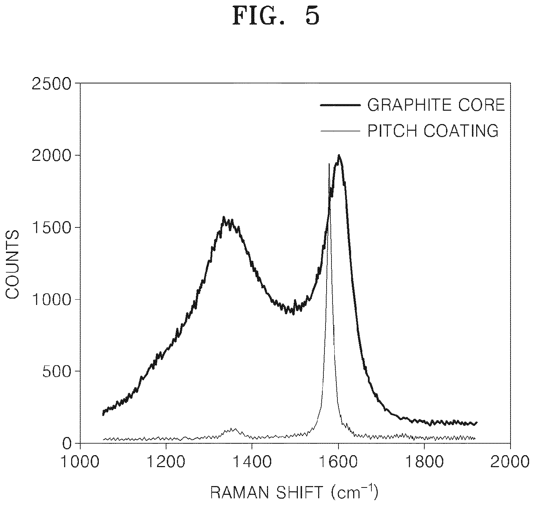

Raman spectrum analysis was performed on a graphite core and a pitch coating layer included in the negative active material used in manufacturing the coin cell of Example 1, and results thereof are shown in FIG. 5.

Raman spectrum analysis on the graphite core and the pitch coating layer were repeatedly performed three times, and the D/G ratio defined as Equation 1 below was calculated and results thereof are shown in Table 1 below.

## Equation 1

$$\text{D/G ratio} = [\text{Intensity area of D band peak}] / [\text{Intensity area of G band peak}]$$

In a Raman spectrum, a D band peak may have its peak center in a frequency number of 1340 to 1360 cm$^{-1}$, and a G band peak may have its peak center in a frequency number of 1570 to 1590 cm$^{-1}$.

Table 1

|  | D/G | | |
|---|---|---|---|
|  | Measuring once | Measuring twice | Measuring three times |
| Graphite (core) | 0.1 | 0.1 | 0.1 |
| Pitch (coating layer) | 3.2 | 3.1 | 3.2 |

As shown in Table 1, the D/G ratio of the graphite core was about 0.1, and the D/G ratio of the pitch coating layer was in a range of 3.1 to 3.2. Such a D/G difference may be due to different crystallinity of the graphite core and the pitch coating layer.

**Evaluation Example 3: Particle distribution analysis of negative active material**

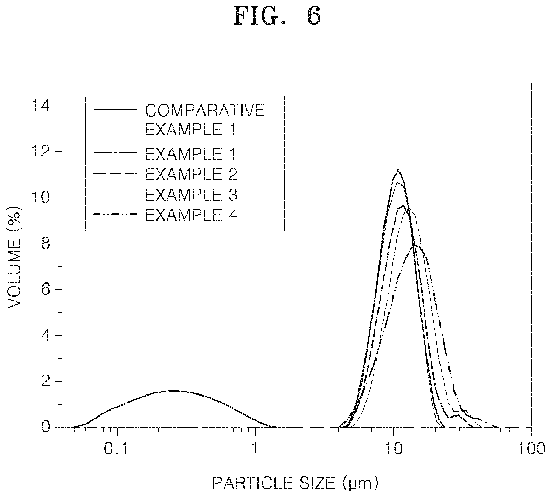

Particle distributions of the negative active materials used in the coin cells of Example 1 and Comparative Example 1 were measured by using a Beckmann culter counter particle distribution analyzer, and results thereof are shown in Table 2 below and FIG. 6.

Table 2

|  | Pitch coating amount | D10 | D50 | D90 |
|---|---|---|---|---|
| Comparative Example 1 | 0 wt% | 0.17 | 11.6 | 18.2 |
| Example 1 | 3 wt% | 7.61 | 12.7 | 16.9 |
| Example 2 | 6 wt% | 8.08 | 12.9 | 19.2 |
| Example 3 | 10 wt% | 7.96 | 13.3 | 23.9 |

(continued)

|  | Pitch coating amount | D10 | D50 | D90 |
|---|---|---|---|---|
| Example 4 | 15 wt% | 8.19 | 15.0 | 35.1 |
| [unit: μm] | | | | |

As shown in Table 2 and FIG. 6, it was confirmed that in the case of the negative active material of Comparative Example 1 in which pitch coating was not performed, SiNWs were separated at a particle size of 1 μm or less, and in the case of the negative active materials of Example 1-3 in which pitch coating was performed, SiNWs were not separated at a particle size of 1 μm or less, and a particle size was increased due to the pitch coating.

**Evaluation Example 3: Electric conductivity of negative active material**

To measure electric conductivity of the negative active materials used in manufacturing the coin cells of Example 1 and Comparative Example 1, an electric conductivity evaluator (MCP-PD51, Mitsubishi Chemical Company) was used to measure electric conductivity of powder with respect to a pressed density.

The negative active materials used in manufacturing the coin cells of Example 1 and Comparative Example 1 were filled in holders and then pressure was applied thereto to prepare pellets. A mass of each of the pellets was 2.040 g. A distance between electrodes was 3 mm, a radius of an electrode was 0.7 mm, and a radius of each pellet was 10 mm. At each pressure, a resistance (R) of a pattern was measured by using a four-point probe. A specific resistance and an electric conductivity were measured using correction factors in consideration of the thickness and shape of the pattern and the resistance.

Specific resistance measurement formulation: $\rho = G \times R$, $G = 3.575 \times t$

(p: specific resistance, R: resistance, G: shape correction factor, and t: pattern thickness)

$$\sigma = \frac{1}{\rho}$$

σ: electric conductivity, p: specific resistance

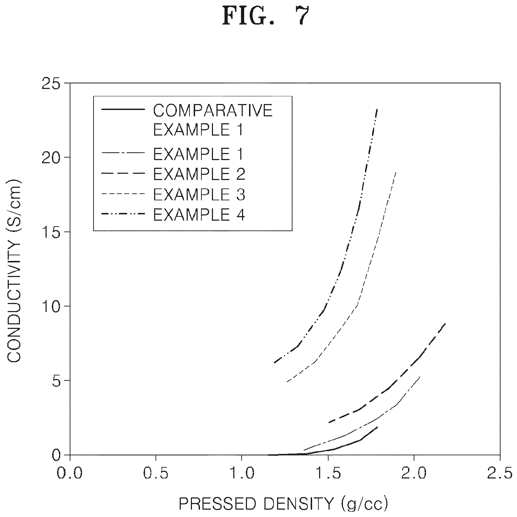

The electric conductivity evaluation results are shown in FIG. 7. Referring to FIG. 7, the greater the pitch coating amount is, the higher the electric conductivity is. The increased electric conductivity may contribute to improvement in efficiency and lifetime characteristics.

**Evaluation Example 4: pH of negative active material**

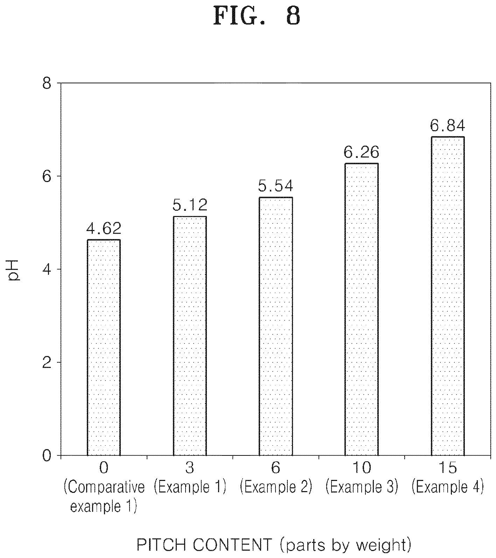

To evaluate pH of the negative active materials used in manufacturing the coin cells of Examples 1 to 4 and Comparative Example 1,5 wt% negative active material solution was prepared using deionized (DI) water and then stirred and left to sit for 30 minutes. In the solution, graphite was sunk and separated from the SiNWs that were floated. A pH of the solution was measured. The pH data are shown in FIG. 8.

As shown in FIG. 8, the greater the pitch coating amount is, the higher the pH is. SiNWs are acidic so that gelation occurs when a slurry is prepared. However, when pitch coating is performed as in the examples above, SiNWs are neutralized to prevent the slurry gelation and improve processibility.

(Cell properties evaluation)

**Evaluation Example 5: Electrode volumetric expansion ratio measurement**

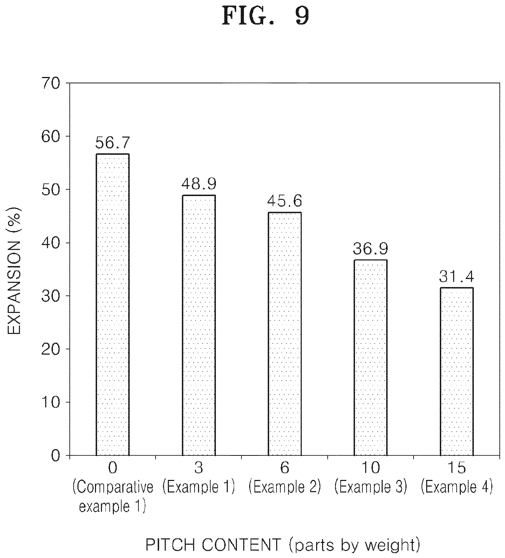

The coin cells of Examples 1-4 and Comparative Example 1 were charged (formation) at a current of 0.05 C and then the coin cells were disassembled to compare a thickness of a negative electrode plate before and after the charging, and a volumetric expansion ratio of the negative electrodes of the coin cells was measured. The results thereof are shown in FIG. 9.

As shown in FIG. 9, the greater the pitch coating amount is, the less the expansion ratio is. This is because SiNWs suppress the expansion. The decreased expansion ratio may contribute to improved charge and discharge efficiency and lifespan improvement.

**Evaluation Example 6: Charging and discharging test**

The coin cells of Examples 1-4 and Comparative Example 1 were charged at a current of 40 mA per 1 g of a negative active material until a voltage reached 0.001 V(vs. Li), and then discharged with the same amplitude of current until the voltage reached 3 V (vs. Li). Then, within the same current and voltage ranges, charging and discharging were repeatedly performed 50 times.

This charging and discharging test was performed at room temperature of 25°C. A charge-discharge efficiency (CDE) is defined according to Equation 2 below. A capacity retention ratio (CRR) is defined according to Equation 3 below.

**Equation 2**

$$CDE\ [\%] = [\text{discharging capacity in each cycle / charging capacity in the same cycle}] \times 100$$

**Equation 3**

$$CRR\ [\%] = [\text{discharging capacity in each cycle / discharging capacity in a first cycle}] \times 100$$

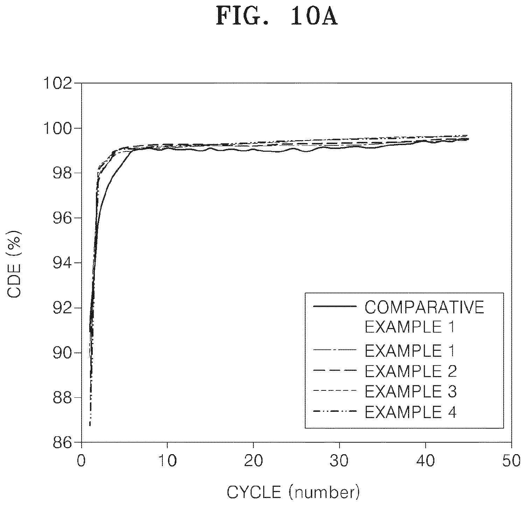

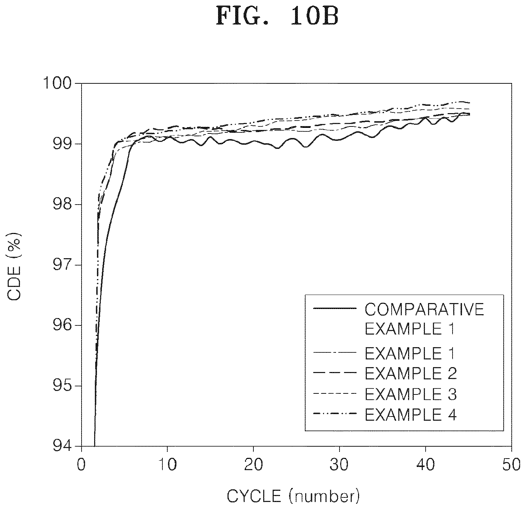

CDE data of the coin cells of Examples 1-4 and Comparative Example 1 are shown in FIG. 10A, and FIG. 10B is an enlarged view of an y-axis of FIG. 10A.

Referring to FIGS. 10A and 10B, the greater the pitch coating amount is, the higher the charge-discharge efficiency is. This is because due to the pitch coating, conductivity of an electrode plate is increased, and also an expansion ratio is controlled and thus, stability of an electrode plate is guaranteed. Also, when pitch coating was performed, an irreversible capacity ratio is reduced and thus, initial efficiency of cycle is improved.

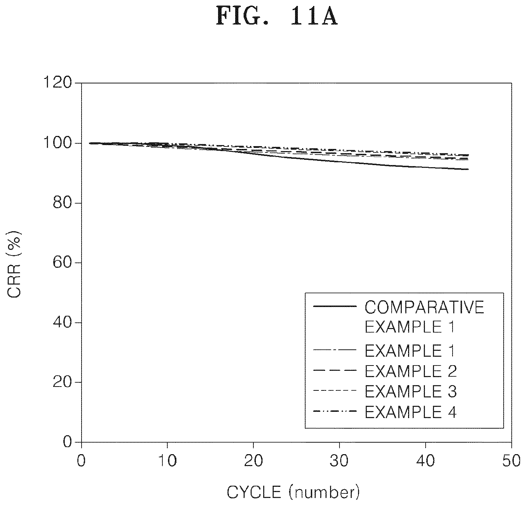

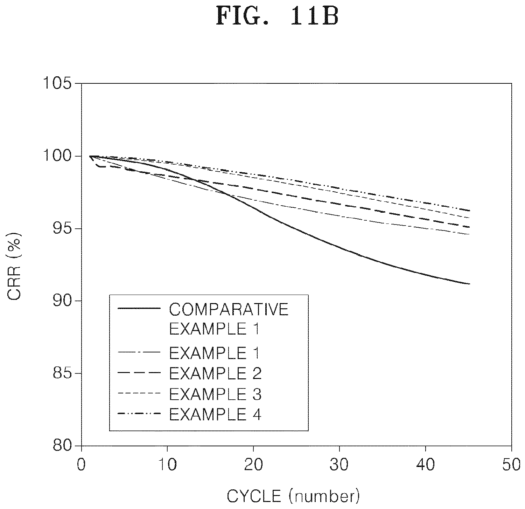

Also, CRR data of the coin cells of Examples 1-4 and Comparative Example 1 are shown in FIG. 11A, and FIG. 11B is an enlarged view of an x-axis of FIG. 11A. Referring to FIGS. 11A and 11B, the greater the pitch coating amount is, the higher the CRR is.

From the charging and discharging results, it is confirmed that due to the pitch coating on the SiNW negative active material prepared using spherical graphite as a base material, electric conductivity of an electrode plate is increased, and also an expansion ratio is controlled and thus stability of the electrode plate is guaranteed, and rate characteristics and lifespan characteristics are improved.

The negative active material may control an expansion ratio during charging and discharging of a lithium battery and may provide conductivity to a negative electrode plate to improve CDE and cycle lifespan characteristics of a lithium battery.

It should be understood that the exemplary embodiments described herein should be considered in a descriptive sense only and not for purposes of limitation. Descriptions of features or aspects within each embodiment should typically be considered as available for other similar features or aspects in other embodiments. That is, while the present invention has been described in connection with certain exemplary embodiments, it is to be understood that the invention is not limited to the disclosed embodiments, but, on the contrary, is intended to cover various modifications and equivalent arrangements included within the scope of the appended claims.

**Claims**

1.    A negative active material comprising primary particles, each primary particle comprising:

a crystalline carbonaceous core (110) with silicon-based nanowires (120) on a surface thereof; and
an amorphous carbonaceous coating layer (130) coated on the crystalline carbonaceous core (110) so as to embed at least a portion of the silicon-based nanowires (120), wherein at least 50 vol% of the silicon-based nanowires (120) is embedded in the amorphous carbonaceous coating layer (130).

2. The negative active material of claim 1, wherein a thickness of the amorphous carbonaceous coating layer (130) is in a range of 0.1 to 10 $\mu$m.

3. The negative active material of claim 1 or 2, wherein a D/G ratio of the amorphous carbonaceous coating layer (130) is 0.31 or more, and wherein the D/G ratio is a ratio of a D, defect, band peak intensity area with respect to a G, graphite' band peak intensity area in a Raman spectrum.

4. The negative active material of any one of claims 1 to 3, wherein the amorphous carbonaceous coating layer (130) comprises an amorphous carbon selected from the group consisting of soft carbon, hard carbon, pitch carbonized material, mesophase carbonized material, calcined cokes, and combinations thereof.

5. The negative active material of any one of claims 1 to 4, wherein for a primary particle (100) an amount of the amorphous carbonaceous coating layer (130) is in a range of 0.1 to 30 wt% based on the primary particle.

6. The negative active material of any one of claims 1 to 5, wherein the crystalline carbonaceous core has a circularity of 0.2 to 1.

7. The negative active material of any one of claims 1 to 6, wherein a D/G ratio of the crystalline carbonaceous core (110) is 0.3 or less, and wherein the D/G ratio is a ratio of a D, defect, band peak intensity area with respect to a G, graphite, band peak intensity area in a Raman spectrum.

8. The negative active material of any one of claims 1 to 7, wherein the crystalline carbonaceous core (110) comprises at least one selected from the group consisting of natural graphite, artificial graphite, expandable graphite, graphene, carbon black, and fullerene soot.

9. The negative active material of any one of claims 1 to 8, wherein an average particle diameter of the crystalline carbonaceous core (110) is in a range of 1 to 30 $\mu$m.

10. The negative active material of any one of claims 1 to 9, wherein the silicon-based nanowires (120) comprise at least one selected from the group consisting of Si; SiOx, where 0<x≤2; and Si-Z alloys, where Z is an alkali metal, an alkali earth metal, a Group 13 element, a Group 14 element, a Group 15 element, a Group 16 element, a transition metal, a rare earth element, or a combination thereof and is not Si, preferably the silicon-based nanowires are Si-nanowires.

11. The negative active material of any one of claims 1 to 10, wherein each of the silicon-based nanowires (120) independently has a diameter of 10 to 500 nm and a length of 0.1 to 100 $\mu$m.

12. The negative active material of any one of claims 1 to 11, wherein the silicon-based nanowires (120) are directly grown on the crystalline carbonaceous core (110), optionally wherein the silicon-based nanowires are grown in the presence or absence of at least one metal catalyst selected from the group consisting of Pt, Fe, Ni, Co, Au, Ag, Cu, Zn, and Cd.

13. The negative active material of any one of claims 1 to 12, wherein based on a total amount of the crystalline carbonaceous core (110) and the silicon-based nanowires (120), an amount of the crystalline carbonaceous core is in a range of 60 to 99 wt% and an amount of the silicon-based nanowires is in a range of 1 to 40 wt%.

14. A lithium battery (30) comprising:

a negative electrode (22) comprising the negative active material of any one of claims 1 to 13;
a positive electrode (23) facing the negative electrode; and
an electrolyte between the negative electrode and the positive electrode.

15. The lithium battery (30) of claim 14, wherein the negative electrode (22) further comprises at least one binder selected from the group consisting of polyvinylidenefluoride, polyvinylidenechloride, polybenzimidazole, polyimide, polyvinylacetate, polyacrylonitrile, polyvinylalcohol, carboxymethylcellulose (CMC), starch, hydroxypropylcellulose, regenerated cellulose, polyvinylpyrrolidone, polyethylene, polypropylene, polystyrene, polymethylmethacrylate, polyaniline, acrylonitrile-butadiene-styrene copolymer, phenol resin, epoxy resin, polyethyleneterethphalate, polytetrafluoroethylene, polyphenylsulfide, polyamideimide, polyetherimide, polyethersulfone, polyamide, polyacetal, polyphenyleneoxide, polybutyleneterephthalate, ethylene-propylene-diene terpolymer (EPDM), sulfonated EPDM, styrene butadiene rubber, and a fluorine rubber, optionally wherein an amount of the binder is in a range of 1 to 50 parts by weight based on 100 parts by weight of the negative active material.

**Patentansprüche**

1. Negatives aktives Material, umfassend Primärpartikel, wobei jedes Primärpartikel umfasst:

   einen kristallinen kohlenstoffhaltigen Kern (110) mit Nanodrähten auf Siliciumbasis (120) auf einer Oberfläche davon; und
   eine amorphe kohlenstoffhaltige Überzugsschicht (130), aufgebracht auf den kristallinen Kohlenstoffkern (110), um zumindest einen Teil der Nanodrähte auf Siliciumbasis (120) einzubetten, wobei mindestens 50 Vol.-% der Nanodrähte auf Siliciumbasis (120) in der amorphen kohlenstoffhaltigen Überzugsschicht (130) eingebettet sind.

2. Negatives aktives Material nach Anspruch 1, wobei eine Dicke der amorphen kohlenstoffhaltigen Überzugs schicht (130) in einem Bereich von 0,1 bis 10 $\mu$m liegt.

3. Negatives aktives Material nach Anspruch 1 oder 2, wobei ein D/G-Verhältnis der amorphen kohlenstoffhaltigen Überzugsschicht (130) 0,31 oder mehr beträgt, und wobei das D/G-Verhältnis ein Verhältnis einer Intensitätsfläche des Peaks der D-Bande, Defektbande, zu einer Intensitätsfläche des Peaks der G-Bande, Graphitbande, in einem Raman-Spektrum ist.

4. Negatives aktives Material nach einem der Ansprüche 1 bis 3, wobei die amorphe kohlenstoffhaltige Überzugsschicht (130) einen amorphen Kohlenstoff, ausgewählt aus der Gruppe bestehend aus Weichkohlenstoff, Hartkohlenstoff, carbonisiertem Pechmaterial, carbonisiertem Mesophasenmaterial, kalzinierten Koksen, und Kombinationen davon, umfasst.

5. Negatives aktives Material nach einem der Ansprüche 1 bis 4, wobei bei einem Primärpartikel (100) eine Menge der amorphen kohlenstoffhaltigen Überzugsschicht (130) in einem Bereich von 0,1 bis 30 Gew.-%, bezogen auf das Primärpartikel, liegt.

6. Negatives aktives Material nach einem der Ansprüche 1 bis 5, wobei der kristalline kohlenstoffhaltige Kern eine Rundheit von 0,2 bis 1 aufweist.

7. Negatives aktives Material nach einem der Ansprüche 1 bis 6, wobei ein D/G-Verhältnis des kristallinen kohlenstoffhaltigen Kerns (110) 0,3 oder weniger beträgt, und wobei das D/G-Verhältnis ein Verhältnis einer Intensitätsfläche des Peaks der D-Bande, Defektbande, zu einer Intensitätsfläche des Peaks der G-Bande, Graphitbande, in einem Raman-Spektrum ist.

8. Negatives aktives Material nach einem der Ansprüche 1 bis 7, wobei der kristalline kohlenstoffhaltige Kern (110) mindestens eines, ausgewählt aus der Gruppe bestehend aus natürlichem Graphit, künstlichem Graphit, expandierbarem Graphit, Graphen, Ruß und Fullerenruß, umfasst.

9. Negatives aktives Material nach einem der Ansprüche 1 bis 8, wobei ein mittlerer Teilchendurchmesser des kristallinen kohlenstoffhaltigen Kerns (110) in einem Bereich von 1 bis 30 $\mu$m liegt.

10. Negatives aktives Material nach einem der Ansprüche 1 bis 9, wobei die Nanodrähte auf Siliciumbasis (120) mindestens eines, ausgewählt aus der Gruppe bestehend aus Si; $SiO_x$, wobei $0 < x \leq 2$; und Si-Z-Legierungen, wobei Z ein Alkalimetall, ein Erdalkalimetall, ein Element der Gruppe 13, ein Element der Gruppe 14, ein Element der Gruppe 15, ein Element der Gruppe 16, ein Übergangsmetall, ein Seltenerdmetall, oder eine Kombination davon ist und nicht Si ist, umfassen, vorzugsweise sind die Nanodrähte auf Siliciumbasis Si-Nanodrähte.

11. Negatives aktives Material nach einem der Ansprüche 1 bis 10, wobei jeder der Nanodrähte auf Siliciumbasis (120) unabhängig voneinander einen Durchmesser von 10 bis 500 nm und eine Länge von 0,1 bis 100 $\mu$m aufweist.

**12.** Negatives aktives Material nach einem der Ansprüche 1 bis 11, wobei die Nanodrähte auf Siliciumbasis (120) direkt auf den kristallinen kohlenstoffhaltigen Kern (110) aufgewachsen sind, gegebenenfalls wobei die Nanodrähte auf Siliciumbasis in Gegenwart oder Abwesenheit von mindestens einem Metallkatalysator, ausgewählt aus der Gruppe bestehend aus Pt, Fe, Ni, Co, Au, Ag, Cu, Zn und Cd, aufgewachsen sind.

**13.** Negatives aktives Material nach einem der Ansprüche 1 bis 12, wobei, bezogen auf eine Gesamtmenge des kristallinen kohlenstoffhaltigen Kerns (110) und der Nanodrähte auf Siliciumbasis (120), eine Menge des kristallinen kohlenstoffhaltigen Kerns in einem Bereich von 60 bis 99 Gew.-% liegt und eine Menge der Nanodrähte auf Siliciumbasis in einem Bereich von 1 bis 40 Gew.-% liegt.

**14.** Lithiumbatterie (30), umfassend:

eine negative Elektrode (22), umfassend das negative aktive Material nach einem der Ansprüche 1 bis 13;
eine positive Elektrode (23), gegenüberliegend der negativen Elektrode; und
einen Elektrolyten zwischen der negativen Elektrode und der positiven Elektrode.

**15.** Lithiumbatterie (30) nach Anspruch 14, wobei die negative Elektrode (22) weiterhin mindestens ein Bindemittel, ausgewählt aus der Gruppe bestehend aus Polyvinylidenfluorid, Polyvinylidenchlorid, Polybenzimidazol, Polyimid, Polyvinylacetat, Polyacrylnitril, Polyvinylalkohol, Carboxymethylcellulose (CMC), Stärke, Hydroxypropylcellulose, regenerierter Cellulose, Polyvinylpyrrolidon, Polyethylen, Polypropylen, Polystyrol, Polymethylmethacrylat, Polyanilin, Acrylnitril-Butadien-Styrol-Copolymer, Phenolharz, Epoxidharz, Polyethylenterephthalat, Polytetrafluorethylen, Polyphenylsulfid, Polyamidimid, Polyetherimid, Polyethersulfon, Polyamid, Polyacetal, Polyphenylenoxid, Polybutylenterephthalat, Ethylen-Propylen-Dien-Terpolymer (EPDM), sulfoniertem EPDM, Styrol-Butadien-Kautschuk und einem Fluorkautschuk, umfasst, gegebenenfalls wobei eine Menge des Bindemittels in einem Bereich von 1 bis 50 Gewichtsteilen, bezogen auf 100 Gewichtsteile des negativen aktiven Materials, liegt.

## Revendications

**1.** Matériau actif négatif comprenant des particules primaires, chaque particule primaire comprenant :

un noyau carboné cristallin (110) ayant des nanofils à base de silicium (120) sur une surface de celui-ci ; et
une couche de revêtement carboné amorphe (130) déposée sur le noyau carboné cristallin (110) de sorte à incorporer au moins une partie des nanofils à base de silicium (120), où au moins 50% en volume des nanofils à base de silicium (120) sont incorporés dans la couche de revêtement carboné amorphe (130).

**2.** Matériau actif négatif de la revendication 1, dans lequel une épaisseur de la couche de revêtement carboné amorphe (130) est comprise dans une plage allant de 0,1 à 10 $\mu$m.

**3.** Matériau actif négatif de la revendication 1 ou 2, dans lequel un rapport D/G de la couche de revêtement carboné amorphe (130) est supérieur ou égal à 0,31, et dans lequel le rapport D/G est un rapport d'une zone d'intensité maximale de la bande D (défaut) par rapport à une zone d'intensité maximale de la bande G (graphite) dans un spectre Raman.

**4.** Matériau actif négatif de l'une quelconque des revendications 1 à 3, dans lequel la couche de revêtement carboné amorphe (130) comprend un carbone amorphe choisi dans le groupe consistant en un carbone doux, un carbone dur, un matériau carbonisé à base de brai, un matériau carbonisé en mésophase, des cokes calcinés, et des combinaisons de ceux-ci.

**5.** Matériau actif négatif de l'une quelconque des revendications 1 à 4, dans lequel pour une particule primaire (100) une quantité de la couche de revêtement carboné amorphe (130) est comprise dans une plage allant de 0,1 à 30% en poids par rapport à la particule primaire.

**6.** Matériau actif négatif de l'une quelconque des revendications 1 à 5, dans lequel le noyau carboné cristallin présente une circularité allant de 0,2 à 1.

**7.** Matériau actif négatif de l'une quelconque des revendications 1 à 6, dans lequel un rapport D/G du noyau carboné cristallin (110) est inférieur ou égal à 0,3, et dans lequel le rapport D/G est un rapport d'une zone d'intensité maximale de la bande D (défaut) par rapport à une zone d'intensité maximale de la bande G (graphite) dans un spectre Raman.

8. Matériau actif négatif de l'une quelconque des revendications 1 à 7, dans lequel le noyau carboné cristallin (110) comprend au moins un élément choisi dans le groupe consistant en du graphite naturel, du graphite artificiel, du graphite expansible, du graphène, du noir de carbone, et de la suie de fullerène.

9. Matériau actif négatif de l'une quelconque des revendications 1 à 8, dans lequel un diamètre moyen de particules du noyau carboné cristallin (110) est compris dans une plage allant de 1 à 30 $\mu$m.

10. Matériau actif négatif de l'une quelconque des revendications 1 à 9, dans lequel les nanofils à base de silicium (120) comprennent au moins un élément choisi dans le groupe consistant en Si ; SiOx, où $0<x\leq2$ ; et des alliages de Si-Z, où Z représente un métal alcalin, un métal alcalino-terreux, un élément du groupe 13, un élément du groupe 14, un élément du groupe 15, un élément du groupe 16, un métal de transition, un élément des terres rares, ou une combinaison de ceux-ci et ne représente pas un atome de Si, de préférence les nanofils à base de silicium sont des nanofils de Si.

11. Matériau actif négatif de l'une quelconque des revendications 1 à 10, dans lequel chacun des nanofils à base de silicium (120) a indépendamment un diamètre compris entre 10 et 500 nm et une longueur comprise entre 0,1 et 100 $\mu$m.

12. Matériau actif négatif de l'une quelconque des revendications 1 à 11, dans lequel les nanofils à base de silicium (120) sont formés directement sur le noyau carboné cristallin (110), facultativement dans lequel les nanofils à base de silicium sont formés en présence ou en l'absence d'au moins un catalyseur métallique choisi dans le groupe consistant en Pt, Fe, Ni, Co, Au, Ag, Cu, Zn, et Cd.

13. Matériau actif négatif de l'une quelconque des revendications 1 à 12, dans lequel, par rapport à une quantité totale du noyau carboné cristallin (110) et des nanofils à base de silicium (120), une quantité du noyau carboné cristallin est comprise dans une plage allant de 60 à 99% en poids et une quantité des nanofils à base de silicium est comprise dans une plage allant de 1 à 40% en poids.

14. Batterie au lithium (30) comprenant :

une électrode négative (22) comprenant le matériau actif négatif de l'une quelconque des revendications 1 à 13 ;
une électrode positive (23) faisant face à l'électrode négative ; et
un électrolyte se trouvant entre l'électrode négative et l'électrode positive.

15. Batterie au lithium (30) de la revendication 14, dans laquelle l'électrode négative (22) comprend en outre au moins un liant choisi dans le groupe consistant en le polyfluorure de vinylidène, le polychlorure de vinylidène, le polybenzimidazole, le polyimide, le polyacétate de vinyle, le polyacrylonitrile, l'alcool polyvinylique, la carboxyméthylcellulose (CMC), l'amidon, l'hydroxypropylcellulose, la cellulose régénérée, la polyvinylpyrrolidone, le polyéthylène, le polypropylène, le polystyrène, le polyméthacrylate de méthyle, la polyaniline, un copolymère acrylonitrile-butadiène-styrène, une résine phénolique, une résine époxy, le polyéthylènetéréphtalate, le polytétrafluoroéthylène, le polysulfure de phénylène, le polyamideimide, le polyéthérimide, la polyéthersulfone, le polyamide, le polyacétal, l'oxyde de polyphénylène, le polybutylènetéréphtalate, un terpolymère éthylène-propylène-diène (EPDM), un EPDM sulfoné, un caoutchouc styrène-butadiène, et un caoutchouc fluoré, facultativement dans laquelle une quantité du liant est comprise dans une plage allant de 1 à 50 partie(s) en poids par rapport à 100 parties en poids du matériau actif négatif.

FIG. 1

# FIG. 2

## FIG. 3A

## FIG. 3B

FIG. 4A

FIG. 4B

# FIG. 5

FIG. 6

FIG. 7

# FIG. 8

FIG. 9

# FIG. 10A

FIG. 10B

# FIG. 11A

FIG. 11B

**EP 2 579 365 B1**

**Patent documents cited in the description**

- US 2010285359 A

**Non-patent literature cited in the description**

- Lithium-ion batteries based on carbon-silicon-graphite compositre anode. **KHOMENKO et al.** JOURNAL OF POWER SOURCES. ELSEVIER, 28 February 2007, vol. 165, 598-608